# EUROPEAN PATENT APPLICATION

(11) **EP 1 703 502 A2**
(43) Date of publication of application: **20.09.2006**
(21) Application number: 06300166.3
(22) Date of filing: 27.02.2006
(51) Int. Cl.: G11B 7/12, G11B 7/135, G11B 7/22

(54) **Scanner for optical storage media**

(30) Priority: 18.03.2005 DE 102005013069
(71) Applicant: Thomson Licensing, 92100 Boulogne-Billancourt (FR)
(72) Inventor: Bammert, Michael, 78739 Hardt (DE); Suzuki, Tsuneo, 78087 Mönchweiler (DE); Tabor, Günter, 78056 Villingen-Schwenningen (DE); Dupper, Rolf, 78050 Villingen-Schwenningen (DE)
(74) Representative: Thies, Stephan

(57) **Abstract**

The present invention relates to a scanner (1) for optical storage media, and to an appliance for reading from and/or writing to optical storage media which uses a scanner (1) such as this.

The invention proposes a scanner (1) for optical storage media, having an objective lens (3) which is mounted in a lens holder (2) by means of an adhesive (7), with the adhesive (7) being designed to provide protection for the objective lens (3).

## Description

The present invention relates to a scanner for optical storage media, and to an appliance for reading from and/or writing to optical storage media which uses a scanner such as this.

Scanners for optical storage media, such as CDs (compact discs) or DVDs (digital versatile discs) normally use an actuator to control the spatial position of a scanning or writing beam. During reproduction from or recording on optical storage media by such an optical scanner there is a risk that a control loop for the actuator is disturbed and the actuator collides with the storage medium in an uncontrolled manner. In order to prevent an objective lens which is attached to the actuator being damaged in a collision such as this, for example by being scratched, lens protection is frequently provided. One such means of lens protection is known, for example, from JP 2003-338063.

The lens protection is normally composed of a hard material. This has the disadvantage that it provides protection exclusively for the objective lens, and that the optical storage medium is still scratched. The scratches are produced radially, thus making further reading more difficult.

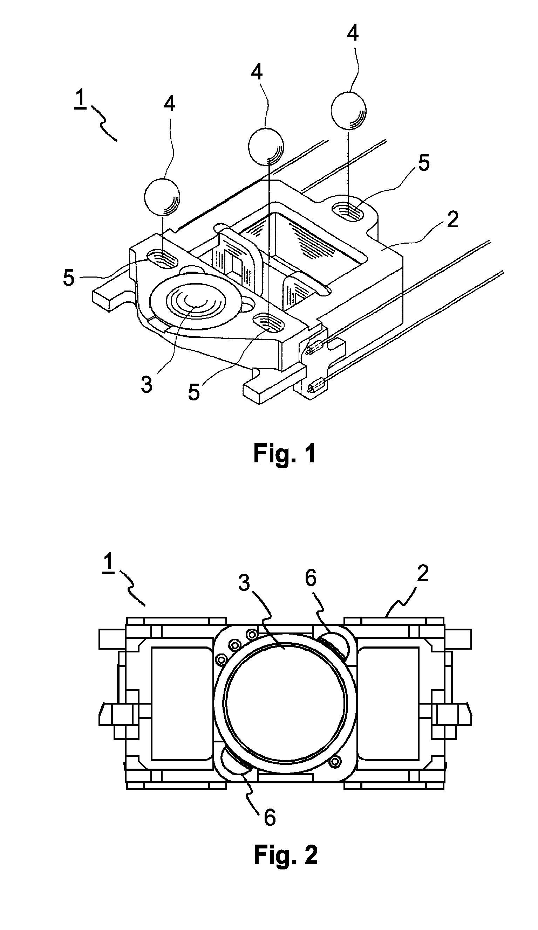

US 2001/0019534 discloses objective lens stoppers in the form of balls composed of silicone rubber, which are pressed into associated cutouts in the actuator. This solution is illustrated in Figure 1, but has the disadvantage that additional parts must be used.

One object of the invention is to propose an optical scanner in which damage to the optical storage medium and to the objective lens is prevented, and which can be produced easily.

According to the invention, this object is achieved by a scanner for optical storage media, having an objective lens which is mounted in a lens holder by means of an adhesive, in which the adhesive is designed to provide protection for the objective lens. The objective lens is adhesively bonded to the lens holder. A small amount of excess adhesive protects the optical storage medium and the objective lens against being damaged in the event of collisions. At the same time, no additional parts are required for protection of the objective lens, thus resulting in cost savings. Furthermore, the solution according to the invention reduces the mass of the actuator, thus making it possible to achieve faster scanning of an optical storage medium.

The lens holder advantageously has adhesive pockets, which are adjacent to the objective lens, for holding the adhesive. This on the one hand results in reliable attachment of the objective lens, while on the other hand fixing the adhesive which is used for protection precisely in position.

Optimum protection of the objective lens and of the optical storage medium is achieved by the adhesive projecting beyond the lens holder and the objective lens.

The objective lens is preferably adhesively bonded to the lens holder by means of a soft adhesive. Although a hard adhesive may also be used, a soft adhesive damps the natural frequencies of the lens holder, so that the lens is decoupled from the natural frequencies of the lens holder.

A scanner according to the invention is preferably used in an appliance for reading from and/or writing to optical storage media.

In order to assist understanding, the invention will be explained with reference to Figures 1 to 3 in the following text. Identical reference symbols in this case denote identical elements. In the figures:
- Figure 1: shows a scanner for optical storage media according to the prior art;
- Figure 2: shows a scanner according to the invention for optical storage media; and
- Figure 3: shows a section illustration of the scanner shown in Figure 2.

Figure 1 shows a scanner 1 for optical storage media according to the prior art. The scanner 1 has a lens holder 2 for holding an objective lens 3, which is mounted in an opening in the lens holder 2. Three balls 4 composed of silicone rubber, which are pressed into associated cutouts 5 in the lens holder 2, act as protection against collisions between the objective lens 3 and an optical storage medium (not illustrated). Further elements of a scanner are known to those skilled in the art, and will not be explained any further here.

Figure 2 shows a scanner 1 according to the invention for optical storage media. In this case as well, an objective lens 3 is mounted in an opening in a lens holder 2. The mounting takes place by means of a soft adhesive, which is inserted into funnel-shaped adhesive pockets 6. The adhesive pockets 6 are designed such that they extend to the edge of the objective lens 3. If the adhesive pockets 6 are filled with a small amount of excess adhesive, then the projecting adhesive protects the optical storage medium and the objective lens 3 against being damaged by any collisions with the optical storage medium. One example of a soft adhesive is World Rock No. 8799 from Kyoritsu Chemical Co., Ltd with a hardness of 70 Shore A.

Two diagonal adhesion points are used in Figure 2. This is because the magnetic return paths of the actuator are arranged at the sides, so that there is insufficient space. If the space conditions are different, it is, however, likewise possible to use a greater number of adhesion points. One advantage of three or four adhesion points is that the objective lens 3 is held more reliably on all axes. However, this involves greater weight and additional costs. It is particularly advantageous to use three raised adhesion points as a compromise between weight, costs and reliability of the mounting. Furthermore, of course, it is possible for only some of the existing adhesion points to provide protection for the objective lens 3, for example two raised adhesion points of a total of four adhesion points. A circumferential adhesion bead is also possible.

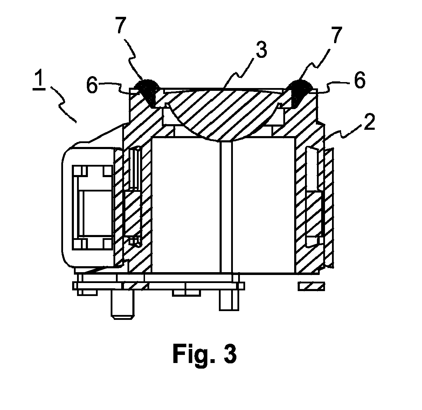

Figure 3 shows a section illustration of the scanner 1. A section profile at 45 degrees has been chosen so that the adhesive pockets 6 can be seen. This illustrates well how the adhesive 7 in the adhesive pockets 6 projects beyond the lens holder 2 and the objective lens 3 in order to fit the objective lens 3, and is thus used for protection in the event of collisions. The objective lens 3 rests relatively loosely on the edge, but is not mechanically connected. This in itself results in a high degree of decoupling. The soft adhesive 7 acts as damping. Even better decoupling is achieved by attachment of the objective lens in such a way that it is does not rest thereon, but is held exclusively by the adhesive 7.

## Claims

1. Scanner (1) for optical storage media, having an objective lens (3) which is mounted in a lens holder (2) by means of an adhesive (7), **characterized in that** the adhesive (7) is designed to provide protection for the objective lens (3).

2. Scanner (1) according to Claim 1 with the lens holder having adhesive pockets (6), which are adjacent to the objective lens (3), for holding the adhesive (7).

3. Scanner (1) according to Claim 1 or 2, with the adhesive (7) projecting beyond the lens holder (2) and the objective lens (3).

4. Scanner (1) according to one of Claims 1 to 3, with the adhesive (7) being soft.

5. Scanner (1) according to one of Claims 1 to 4, with the objective lens (3) being adhesively bonded to the lens holder (2) in such a way that it is decoupled from the natural frequencies of the lens holder (2).

6. Appliance for reading from and/or writing to optical storage media, **characterized in that** the appliance has an optical scanner (1) according to one of Claims 1 to 5.
